# EUROPÄISCHE PATENTSCHRIFT

(11) **EP 1 067 325 B1**
(45) Veröffentlichungstag und Bekanntmachung des Hinweises auf die Patenterteilung: **17.10.2007**
(21) Anmeldenummer: 00114532.5
(22) Anmeldetag: 06.07.2000
(51) Int. Cl.: F16L 55/10, F16L 9/00

(54) **Hohlkörper**
Hollow article
Corps creux

(30) Priorität: 07.07.1999 DE 19931341
(43) Veröffentlichungstag der Anmeldung: 10.01.2001
(73) Patentinhaber: GEMÜ Gebrüder Müller Apparatebau GmbH & Co. KG, 74653 Ingelfingen (DE)
(72) Erfinder: Müller, Fritz, 74653 Ingelfingen (DE); Gaida, Gregor, 74676 Niedernhall (DE)
(74) Vertreter: Hering, Hartmut

(56) Entgegenhaltungen:
- CH-A- 265 283
- US-A- 956 785
- US-A- 4 690 245

## Beschreibung

Die Erfindung befaßt sich mit einem Hohlkörper zur steuerbaren Fluiddurchströmung.

Wenn es bei einer mit Fluid, wie einer Flüssigkeit oder dergleichen, durchströmten Leitung erforderlich ist, die Durchflußmenge und/oder die Durchflußgeschwindigkeit zu steuern, so kann man beispielsweise einen Hohlkörper, wie einen Schlauch, aus weichelastomerem Material nehmen. Dieser kann dann zur Steuerung der Fluiddurchströmung in vorbestimmter Weise zusammengedrückt oder zusammengequetscht werden. Die Genauigkeit der Beeinflussung des durch den Hohlkörper durchgehenden Fluidstroms ist aber unzulänglich und insbesondere kommt es zu Brüchen aufgrund von Materialermüdung bei wiederholtem Zusammendrücken eines solchen Hohlkörpers aus weichelastomerem Material.

Es besteht daher ein Bedürfnis nach einem Hohlkörper, welcher eine steuerbare Fluiddurchströmung über eine lange Gebrauchsdauer hinweg auf möglichst kostengünstige Weise derart gestattet, daß eine äußerst genaue und vorherbestimmbare Beeinflussung auf das durch den Hohlkörper strömende Fluid in zuverlässiger Weise sichergestellt ist.

Nach der Erfindung wird hierzu ein Hohlkörper bereitgestellt, welcher zum Steuern der Durchflussmenge und/oder Durchflussgeschwindigkeit eines durchströmenden Fluids ausgelegt ist, wobei der Hohlkörper aus einem relativ steifen, aber federnd nachgiebigen Material vorgeformt ist, wenigstens zwei rohrförmige Anschlussenden mit einem im Wesentlichen kreisförmigen Querschnitt hat und zwischen denen über kontinuierliche Übergänge wenigstens ein vorgeformter Zwischenabschnitt mit annähernd rhombusförmigem, in Durchmesserrichtung erweitertem Querschnitt vorgesehen ist, welcher nur geringfügig gekrümmte gegenüberliegende Flächen zum Aufbringen einer Kraft von außen zur Steuerung der Durchflussmenge und/oder Durchflussgeschwindigkeit eines durchströmenden Fluids hat, einen wesentlich flacheren lichten Durchströmungsquerschnitt als die Anschlussenden hat und hinsichtlich der Höhe quer zur Durchflussachse verminderte Abmessungen hat.

Nach der Erfindung wird somit ein Hohlkörper-Formstück, d.h. ein vorgeformtes Hohlkörperteil, bereitgestellt, welches zur steuerbaren Beeinflussung der durch den Hohlkörper gehenden Fluidströmung zwischen zwei rohrförmigen Anschlußenden einen vorgeformten Abschnitt hat, welcher aus dem relativ steifen, aber federnd nachgiebigem Material mit einer solchen Gestalt ausgeformt ist, daß der runde Querschnitt in einen ovalen übergeht, ohne daß die lichte Querschnittsfläche wesentlich verringert wird. Der vorgeformte Hohlkörper nach der Erfindung hat somit einen Abschnitt mit bereits hinsichtlich der Höhe quer zur Durchflußachse verminderten Abmessungen, so daß im Falle einer steuerbaren Einflußnahme auf die durch den Hohlkörper gehende Fluidströmung nur wenig Verformungsarbeit mit nur kurzen Stellwegen durchzuführen ist, so daß ein Brechen aufgrund von Materialermüdungen bei wiederholten Durchströmungsquerschnittsänderungen wirksam vermieden wird. Auch hat sich in überraschender Weise gezeigt, daß bei einem derartig vorgeformten Zwischenabschnitt sich eine äußerst genau zu steuernde Beeinflussung auf die durchgehende Fluidströmung verwirklichen läßt, so daß sich auf genau vorherbestimmbare Weise die gewünschten Änderungen hinsichtlich der Fluiddurchströmung im vorgeformten Hohlkörper nach der Erfindung verwirklichen lassen.

Um zu erreichen, daß der vorgeformte Hohlkörper nach der Erfindung aus relativ steifem, aber federnd nachgiebigem Material einen möglichst geringen inhärenten Strömungswiderstand besitzt, sind die kontinuierlichen Übergänge von im wesentlichen kreisförmigem Querschnitt zu im wesentlichen rhombusförmigem Querschnitt dreidimensional konisch ausgebildet. Auf diese Weise erhält man allseitig und gleichmäßig über den gesamten Umfang verteilt jeweils kontinuierliche Übergänge zu den Anschlußenden mit im wesentlichen kreisförmigem Querschnitt, ohne daß abrupte Wandübergänge vorhanden sind.

Insbesondere ist der vorgeformte Hohlkörper nach der Erfindung derart ausgelegt, daß der Abschnitt mit im wesentlichen rhombusförmigem Querschnitt zur Abflachung des lichten Durchströmungsquerschnitts durch äußere Krafteinwirkung nachgiebig verformbar ist. Wenn daher auf diesen Zwischenabschnitt von außen eine Kraft aufgebracht wird, so verformt sich der Zwischenabschnitt und der lichte Durchtrittsquerschnitt wird in diesem Bereich auf die vorbestimmte Weise abgeflacht. Wenn aber die von außen aufgebrachte Kraft wiederum aufgehoben wird, so kehrt der Zwischenabschnitt des vorgeformten Hohlkörpers nach der Erfindung selbsttätig aufgrund der federnden Nachgiebigkeit wieder in seinen Ursprungszustand zurück, ohne daß man hierzu von außen entgegengesetzt gerichtete Kräfte aufbringen muß. Hierdurch läßt sich insbesondere die Dauerbelastung bei einem solchen vorgeformten Hohlkörper nach der Erfindung reduzieren und es wird die Eigenschaft des vorgeformten Hohlkörpers selbst bzw. dessen Material ausgenutzt, um eine Rückstellung in den Ausgangszustand zu bewirken. Auch lassen sich dank dieser Eigenschaft des vorgeformten Hohlkörpers nach der Erfindung entsprechende Einrichtungen zur Kraftbeaufschlagung des vorgeformten Hohlkörpers von außen einfacher ausgestalten, da im Bereich des Zwischenabschnitts immer ein ausreichendes Rückstellvermögen des vorgeformten Hohlkörpers vorhanden ist.

Insbesondere kommt als Material für den vorgeformten Hohlkörper Polyfluoralkoxipolymer (PFA) in Betracht. In diesem Fall kann der vorgeformte Hohlkörper nach der Erfindung mittels Blasformen auf kostengünstige Weise hergestellt werden.

Alternativ kommen auch andere, relativ steife, aber federnd nachgiebige Materialien für die Herstellung des vorgeformten Hohlkörpers nach der Erfindung in Betracht, wobei in diesem Zusammenhang insbesondere auch Metalle zu erwähnen sind. Insbesondere bei der Anwendung auf sogenannten Reinstgebieten, wie der Lebensmittelindustrie und der pharmazeutischen Industrie, kann dies von Vorteil sein.

Zusammenfassend ist es daher wesentlich, daß der vorgeformte Hohlkörper nach der Erfindung aus einem relativ steifen, aber federnd nachgiebigen Material hergestellt werden kann. Zur steuerbaren Fluiddurchströmung umfaßt der vorgeformte Hohlkörper aus einem solchen Material wenigstens zwei rohrförmige Anschlußenden mit einem im wesentlichen kreisförmigen Querschnitt. Hierdurch kann der vorgeformte Hohlkörper nach der Erfindung unter Berücksichtigung der jeweils notwendigen Nennweiten der vorhandenen Anschlußleitungen ohne Schwierigkeiten in ein entsprechendes Leitungssystem eingebunden werden. Zwischen diesen Anschlußenden ist wenigstens ein vorgeformter Abschnitt mit annähernd rhombusförmigem Querschnitt vorgesehen, welcher in Durchmesserrichtung bezogen auf die rohrförmigen Anschlußenden erweitert ist, aber einen wesentlichen abgeflachten lichten Durchströmungsquerschnitt hat. Um möglichst strömungsgünstige Verhältnisse für das durch den vorgeformten Hohlkörper gehende Fluid zu haben, gehen die rohrförmigen Anschlußenden kontinuierlich in den Abschnitt mit dem im wesentlichen rhombusförmigen Querschnitt über.

Die Erfindung wird nachstehend an Hand einer bevorzugten Ausführungsform unter Bezugnahme auf die beigefügte Zeichnung näher erläutert. Darin zeigt:
- Fig. 1: eine perspektivische Ansicht eines vorgeformten Hohlkörpers nach der Erfindung, und
- Fig. 2: eine Längsschnittansicht des in Figur 1 gezeigten vorgeformten Hohlkörpers.

In den Figuren sind gleiche oder ähnliche Teile mit denselben Bezugszeichen versehen.

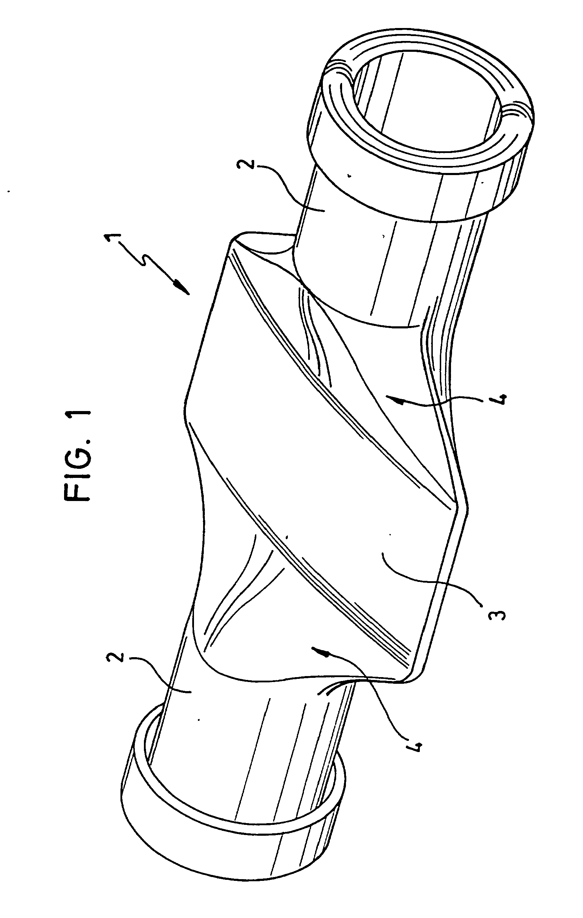

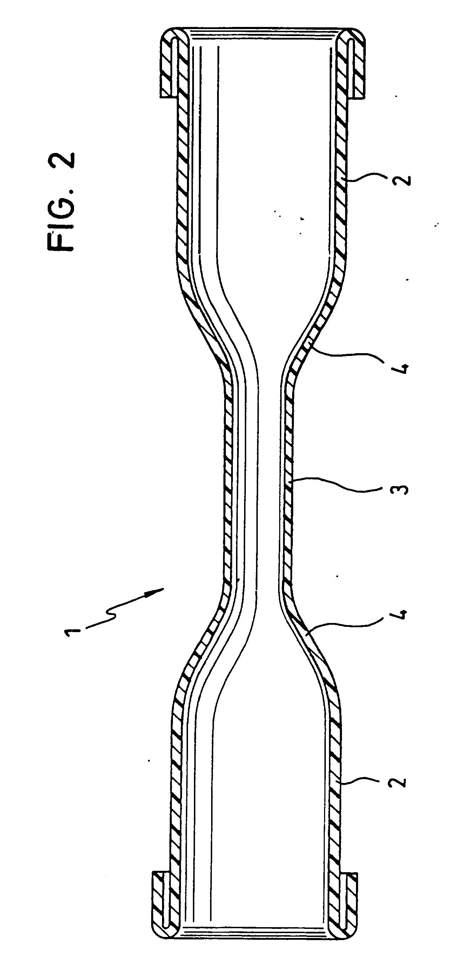

Unter Bezugnahme auf die Figuren 1 und 2 wird eine bevorzugte Ausführungsform eines vorgeformten Hohlkörpers erläutert, welcher dort insgesamt mit 1 bezeichnet ist. Bei der dargestellten Ausführungsform handelt es sich um einen im wesentlichen geradlinig verlaufenden Hohlkörperabschnitt. Natürlich kommen auch andere Ausgestaltungen für den vorgeformten Hohlkörper in Betracht, wie zum Beispiel Bogenstücke, Krümmungsstücke oder dergleichen.

Wie gezeigt, hat der vorgeformte Hohlkörper 1 an den gegenüberliegenden Enden bzw. den Anschlußenden 2 eine rohrförmige Ausbildung mit einem im wesentlichen kreisförmigen Querschnitt. Zwischen diesen Anschlußenden 2 ist ein vorgeformter Zwischenabschnitt 3 vorgesehen, welcher einen im wesentlichen rhombusförmigen Querschnitt besitzt, in Durchmesserrichtung im Vergleich zu den Anschlußenden 2 im Querschnitt erweitert ist, aber - wie insbesondere aus Figur 2 zu ersehen ist - einen wesentlich flacheren lichten Durchströmungsquerschnitt im vorgeformten Zwischenabschnitt 3 hat.

Wie insbesondere aus Figur 1 zu ersehen ist, gehen die im wesentlichen rohrförmigen Anschlußenden 2 dreidimensional konisch verlaufend kontinuierlich in den vorgeformten Zwischenabschnitt 3 in Form von Übergängen 4 über. Der vorgeformte Zwischenabschnitt 3 hat im wesentlichen nur geringfügig gekrümmte, gegenüberliegende Flächen. Wenn man auf den vorgeformten Zwischenabschnitt 3 im Bereich der nur geringfügig gekrümmten Flächen von außen eine Kraft aufbringt, so läßt sich hierdurch die durch den vorgeformten Hohlkörper 1 gehende Fluidströmung in steuerbarer Weise beeinflussen. Da aber der vorgeformte Hohlkörper 1 aus einem relativ steifen, aber federnd nachgiebigen Material hergestellt ist, stellt sich dieser vorgeformte Zwischenabschnitt 3 wieder in seine Ausgangsgestalt selbsttätig zurück, wenn die von außen einwirkende Kraft aufgehoben wird. Der Hohlkörper kann auch zwangsläufig, wie beispielsweise bei Vakuumanwendungen, geöffnet werden.

Vorzugsweise kann ein solcher vorgeformter Hohlkörper 1 nach der Erfindung beispielsweise aus Polyfluorethylen (PFE) oder Polyfluoralkoxipolymer (PFA) oder dergleichen hergestellt sein. Bei diesem Material läßt sich dann der vorgeformte Hohlkörper 1 mittels Blasformen auf kostengünstige Weise herstellen.

Selbstverständlich kommen auch andere Materialien für die Ausformung des vorgeformten Hohlkörpers 1 in Betracht, wenn diese relativ steif, aber federnd nachgiebig sind. Insbesondere kommen auch gegebenenfalls als Materialien hierfür Metalle in Betracht.

Selbstverständlich ist die Erfindung nicht auf die voranstehend beschriebenen Einzelheiten der bevorzugten Ausführungsform beschränkt, sondern es sind zahlreiche Abänderungen und Modifikationen möglich, die der Fachmann im Bedarfsfall treffen wird, ohne die Erfindung gemäß den Ansprüchen zu verlassen. So können beispielsweise auch Hohlkörper hergestellt werden, welche hintereinandergeschaltet mehrere abgeflachte und in Durchmesserrichtung erweiterte Zwischenabschnitte 3 haben. Auch brauchen die Anschlußenden 2 nicht direkt einander gegenüber zu liegen, sondern sie können auch unter einem Winkel zueinander angeordnet sein. Ferner braucht der vorgeformte Hohlkörper 1 nicht notwendigerweise geradlinig ausgelegt sein, sondern er kann auch beispielsweise in Form eines Krümmerabschnitts oder gegebenenfalls einer Abzweigung ausgelegt sein.

### Bezugszeichenliste

- 1: Vorgeformter Hohlkörper insgesamt
- 2: Anschlußenden
- 3: Vorgeformter Zwischenabschnitt
- 4: Übergänge

## Patentansprüche

1. Hohlkörper, welcher zum Steuern der Durchflussmenge und/oder Durchflussgeschwindigkeit eines durchströmenden Fluids ausgelegt ist, wobei der Hohlkörper aus einem relativ steifen, aber federnd elastischen Material vorgeformt ist, wenigstens zwei rohrförmige Anschlussenden (2) mit einem im Wesentlichen kreisförmigen Querschnitt hat und zwischen den röhrförmigen Anschlussenden (2) über kontinuierliche Übergänge (4) wenigstens ein vorgeformter Zwischenabschnitt (3) mit annähernd rhombusförmigem, in Durchmesserrichtung erweitertem Querschnitt vorgesehen ist, welcher nur geringfügig gekrümmte gegenüberliegende Flächen zum Aufbringen einer Kraft von außen zur Steuerung der Durchflussmenge und/oder Durchflussgeschwindigkeit eines durchströmenden Fluids hat, einen wesentlich flacheren lichten Durchströmungsquerschnitt als die Anschlussenden (2) hat und hinsichtlich der Höhe quer zur Durchflussachse verminderte Abmessungen hat.

2. Hohlkörper nach Anspruch 1, **dadurch gekennzeichnet, daß** die kontinuierlichen Übergänge (4) von im wesentlichen kreisförmigem Querschnitt zu im wesentlichen rhombusförmigen Querschnitt des vorgeformten Zwischenabschnitts (3) dreidimensional konisch ausgebildet sind.

3. Hohlkörper nach Anspruch 1 oder 2, **dadurch gekennzeichnet, daß** der Zwischenabschnitt (3) mit im wesentlichen rhombusförmigen Querschnitt zum Verändern des lichten Durchströmungsquerschnitts durch äußere Krafteinwirkung nachgiebig verformbar ist.

4. Hohlkörper nach einem der Ansprüche 1 bis 3, **dadurch gekennzeichnet, daß** er aus Polyfluorethylen (PFE) hergestellt ist.

5. Hohlkörper nach einem der Ansprüche 1 bis 4, **dadurch gekennzeichnet, daß** der Hohlkörper (1) mittels Blasformen hergestellt ist.

6. Hohlkörper nach einem der Ansprüche 1 bis 3, **dadurch gekennzeichnet, daß** er aus Metall hergestellt ist.

7. Hohlkörper nach einem der vorangehenden Ansprüche, **dadurch gekennzeichnet, daß** aufgrund der Formgebung eine zwangsweise Öffnung erfolgt.

## Claims

1. Hollow body designed for controlling the flow capacity and/or flow velocity of a fluid passing through it, said hollow body being preformed from a relatively rigid but resilient and elastic material, having at least two tubular connecting ends (2) of essentially circular cross-section, there being provided between the tubular connecting ends (2) and linked thereto by continuous transitions (4) at least one preformed intermediate section (3) approximately rhomboid in cross-section and broadening in the diametrical direction, the hollow body having only slightly curved opposite faces for the application from outside of a force for controlling the flow capacity and/or flow velocity of a fluid passing through it, having an essentially flatter clear flow area than the connecting ends (2) and reduced dimensions as to height across the axis of flow.

2. Hollow body as defined in Claim 1, **characterised in that** the continuous transitions (4) of essentially circular cross-section are of three-dimensionally conical form relative to the essentially rhomboid cross-section of the preformed intermediate section (3).

3. Hollow body as defined in Claim 1 or 2, **characterised in that** the intermediate section (3) with essentially rhomboid cross-section is flexibly deformable by applying force from outside for changing the clear flow area.

4. Hollow body as defined in one of Claims 1 to 3, **characterised in that** it is made of polyfluoroethylene (PFE).

5. Hollow body as defined in one of Claims 1 to 4, **characterised in that** the hollow body (1) is made by blow moulding.

6. Hollow body as defined in one of Claims 1 to 3, **characterised in that** it is made of metal.

7. Hollow body as defined in one of the preceding Claims, **characterised in that** its forming necessarily gives it an orifice.

## Revendications

1. Corps creux, dont la conception permet de régler la quantité de débit et/ou la vitesse d'écoulement d'un fluide qui le traverse, le corps creux étant préformé dans une matière relativement rigide mais souple et résiliente et présente au moins deux extrémités tubulaires de raccordement (2) ayant une section transversale essentiellement circulaire, ainsi qu'au moins une zone intermédiaire (3) préformée, à peu près en forme de losange, qui est prévue par l'intermédiaire de transitions (4) continues, zone intermédiaire (3), dont la section transversale, élargie dans le sens du diamètre, présente des surfaces opposées seulement légèrement courbées pour l'application depuis l'extérieur d'une force servant à régler la quantité de débit et/ou la vitesse d'écoulement d'un fluide passant à travers, zone intermédiaire, dont la section transversale d'écoulement intérieure est considérablement plus plate que les extrémités de raccordement (2) et qui présente des dimensions réduites au niveau de la hauteur transversale à l'axe d'écoulement.

2. Corps creux suivant la revendication 1, **caractérisé en ce que** depuis une section transversale essentiellement circulaire vers une section transversale essentiellement en forme de losange de la zone intermédiaire préformée, les transitions continues (4) sont conçues en forme de cône tridimensionnel.

3. Corps creux suivant la revendication 1 ou 2, **caractérisé en ce que** pour modifier la section transversale intérieure d'écoulement, la zone intermédiaire (3), qui présente une section transversale essentiellement en forme de losange, est déformable sous l'influence d'une force extérieure.

4. Corps creux suivant une des revendications 1 à 3, **caractérisé en ce qu'**il est fabriqué en polyfluoréthylène (PFE).

5. Corps creux suivant une des revendications 1 à 4, **caractérisé en ce que** le corps creux (1) est fabriqué par soufflage sur matrice.

6. Corps creux suivant une des revendications 1 à 3, **caractérisé en ce qu'**il est fabriqué en métal.

7. Corps creux suivant une des revendications précédentes, **caractérisé en ce qu'**une ouverture forcée se produit grâce à la conception.
